# EUROPEAN PATENT APPLICATION

(11) **EP 2 210 932 A1**
(43) Date of publication of application: **28.07.2010**
(21) Application number: 08846735.2
(22) Date of filing: 27.10.2008
(51) Int. Cl.: C10M 173/00, B23K 35/36, C10M 115/08, C10M 115/10, C10M 117/00, C10M 159/06, C10N 10/04, C10N 30/12, C10N 40/00, C10N 50/02, C10N 50/10

(54) **GREASE COMPOSITION AND PROCESS FOR PRODUCTION THEREOF**

(30) Priority: 05.11.2007 JP 2007287677; 22.07.2008 JP 2008188416
(71) Applicant: Hitachi Construction Machinery Co., Ltd, Tokyo 112-0004 (JP)
(72) Inventor: AKITA, Hideki, Tsuchiura-shi Ibaraki 300-0013 (JP); SAKURAI, Shigeyuki, Tsuchiura-shi Ibaraki 300-0013 (JP); GOKITA, Osamu, Tsuchiura-shi Ibaraki 300-0013 (JP); SEKIDO, Shinichi, Tsuchiura-shi Ibaraki 300-0013 (JP); SENZAKI, Masafumi, Tsuchiura-shi Ibaraki 300-0013 (JP); NAGAI, Yasuchika, Tsuchiura-shi Ibaraki 300-0013 (JP); YAMAMOTO, Mitsuhiro, Tsuchiura-shi Ibaraki 300-0013 (JP); NAKAJIMA, Tooru, Tsuchiura-shi Ibaraki 300-0013 (JP); KOMACHI, Mitsuru, Tokyo 144-0056 (JP); NISHIMURA, Hiroshi, Tokyo 103-0027 (JP); ARAKI, Jun, Tokyo 103-0027 (JP)
(74) Representative: MERH-IP Matias Erny Reichl Hoffmann
(86) International application number: PCT/JP2008/069837
(87) International publication number: WO 2009/060790

(57) **Abstract**

In this grease composition, a grease produced by mixing at least one base oil selected from a mineral oil-type lubricant base oil, a synthetic lubricant base oil, and a biodegradable lubricant base oil with a thickener is compounded with a wax and water, and an additive such as a surfactant and a defoamer is optionally compounded therewith. A soap containing a calcium sulfonate complex is used as the thickener. A carnauba wax is preferably used as the wax. Since this grease composition is mainly composed of a grease and a wax, the grease composition extremely facilities its removal operation after application, is environmentally friendly, and has extremely excellent anti-corrosion performance. When the grease composition is used by being applied to a base material of an object to be welded, an effect of preventing the adhesion of welding spatters can be obtained.

## Description

### TECHNICAL FIELD

The present invention relates to a grease composition in which a grease is compounded with at least a wax and water as well as a process for production thereof. The grease composition of the invention is not only useful as a grease having the functions of rust prevention, mud prevention, anti-fouling, lubrication, and the like for element parts requiring environmental countermeasures but also suitable for use in preventing welding spatters from adhering to an object to be welded such as a steel product.

### BACKGROUND ART

Conventionally, as far as grease compositions are concerned, in order to impart a rust preventing capability, it is necessary to apply a very large amount of grease. Since the adhesivity of the grease to a member to which it is applied is low, the grease is likely to scatter to the surroundings due to the rotary motion, reciprocating motion, and the like. For this reason, environmental consideration has been required in the use of greases.

Meanwhile, as materials having rust preventability equivalent to that of grease, anti-corrosion oils have been used from olden times. However, most of the anti-corrosion oils are of the solvent diluted type, and various problems have occurred such as the problem of catching fire in the presence of a flame, environmental problems due to volatile solvents, the method of discarding, and the like. For this reason, although the anti-corrosion oils excel in the rust preventing capability, the removing operation thereof is frequently difficult, and adverse effects are also exerted on the quality of products.

The reason is that unless the removal of these anti-corrosion oils is effected completely, a dimensional difference arises by the portion of the film thickness of the anti-corrosion oil between the portion where the anti-corrosion oil was removed and the portion where it could not be removed. For this reason, an effect in the degree of precision is exerted on the fastening of a mounting member to a mating member, and the surface preparation becomes nonuniform at the time of application of the grease, so that, in fact, the problem occurs, among others, that the quality in the application of the grease declines. In order to enhance the rust preventing capability of the grease composition, it is necessary to prevent the loss of a grease film during drying, so that it is necessary to improve the film hardness and obtain a gel state.

Further, as a grease composition which has been developed in recent years, one is known which can be used in a wide range of temperature regions from a low temperature to a high temperature and excels in anti-corrosion properties. In this grease composition, a lubricant base oil of a synthetic or mineral oil excelling in low-temperature properties, anti-corrosion properties, heat resistance, and load bearing properties is compounded with 5 to 50 wt.% of a calcium sulfonate complex compound excelling in low-temperature properties as a thickener. In consequence, the low-temperature properties are improved by making use of the characteristics of the calcium sulfonate complex compound (for example, Japanese Patent Laid-Open No. 2002-265969 A).

As another grease composition, one is known which contains sodium thiosulfate and inhibits the generation of rust and improves wear resistance while sufficiently maintaining extreme pressure properties. This grease composition is one in which, in a grease composition containing 0.05 to 30 wt.% of sodium thiosulfate, 0.1 to 5 wt.% of at least one kind of additive selected from the group consisting of (A) calcium salicylate, magnesium salicylate, calcium phenate, and calcium sulfonate is compounded with respect to the total composition, and 0.1 to 5 wt.% of (B) benzotriazole is compounded, as required, with respect to the total composition (for example, Japanese Patent Laid-Open No. 2002-53889 A).

On the other hand, it is known that, at the time of the welding operation of a steel product or the like, spatters in the form of molten granules are scattered from its welding arc, and these spatters adhere to the surface of an object to be welded. If this is left as it is, irregularities due to the spatters remain on the surface of the object to be welded, and the commercial value of the welded product unfavorably declines. Therefore, a welding spatter adhesion preventing agent of an aqueous or non-aqueous type is applied in advance to such as the surface of the object to be welded so as to suppress the spatters generated during welding from adhering to the surface of the object to be welded (for example, Japanese Examined Patent Publication No. H3-50638 B, Japanese Patent Laid-Open No. H7-88685 A, 2000-176680 A).

Incidentally, as grease compositions, it is necessary to provide grease compositions which make it possible to attain the application of an appropriate amount of grease for imparting the rust preventing capability, have high adhesiveness to the member to which the grease is applied, and are environmentally friendly without causing the grease to scatter due to the rotary motion, the reciprocating motion, and the like. It has been desired to provide grease compositions which excel in the rust preventing capability without using an anti-corrosion oil which has various problems. In order to prevent the loss of the grease film during the drying of the applied grease composition and improve the coating properties of the grease composition by improving the hardness and adhesiveness of the grease film, it has been desired to set the grease composition in an emulsion state and to enhance the rust preventing capability after drying.

Accordingly, the present inventors developed a grease composition in the emulsion state by agitating at high speed water and a grease using as a base a calcium sulfonate complex-based thickener which is very high in the rust preventing capability. It was confirmed that this grease composition exhibits excellent properties in the anti-corrosion properties particularly after drying. Namely, it was confirmed that, in this grease composition, a calcium sulfonate complex film is formed on the applied surface during drying after its application, and that the film has a high rust preventing capability. In terms of its hardness, unlike the conventional solvent diluted type anti-corrosion oil, this grease composition, by being made soft, was also able to improve its removal performance whereby it is easy to remove before it solidifies.

Meanwhile, as for welding spatter adhesion preventing agents based on the prior art, a non-aqueous type, for instance, uses an organic solvent, is therefore odorous and toxic, and is likely to constitute a cause for aggravating the environment of a work site. Also, the non-aqueous type is susceptible to the effect of heat generated during the welding operation, and produces such as the environmental problem due to the organic solvent, the problem of disposal, and so forth. On the other hand, an aqueous type spatter adhesion preventing agent does not exert an adverse effect on the work environment during welding. However, the aqueous type preventing agent has a problem in performance in that its effect of preventing the adhesion of the spatters to an object to be welded is not necessarily sufficient.

### DISCLOSURE OF THE INVENTION

It is an object of the present invention to overcome the above-described problems and to provide a grease composition in which a grease in which a base oil is compounded with a thickener such as a calcium sulfonate complex is compounded with a wax and water, in particular, as well as a process for production thereof.

In this grease composition, for example, a surfactant is compounded to allow the water to be present in an emulsion state, and a defoamer is compounded to prevent the generation of foam during application. An admixture thereof is formed into a paste, and while 30 to 70 wt.% of water is being added, the admixture is agitated at high speed to be thereby formed into a satisfactory emulsion state.

Another object of the invention is to provide a grease composition of a non-solvent diluted type which excels in the rust preventing capability and is capable of exhibiting performances of anti-mud properties, anti-fouling properties, and a lubricating function, whose environmental effect is not apprehended, and which is easy to remove.

Still another object of the invention is to provide a grease composition for the prevention of adhesion of welding spatters which is capable of effecting the prevention of the adhesion of spatters to an object to be welded while making use of the advantages of an aqueous type, and which enables improvement of its performances.

### (MEANS FOR SOLVING THE PROBLEMS)

A grease composition according to the present invention is characterized by comprising: a grease produced by compounding at least one kind of base oil selected from the group consisting of a mineral oil-type lubricant base oil, a synthetic lubricant base oil, and a biodegradable lubricant base oil with a thickener; a wax; and water, wherein, based on the weight of the composition, an amount of the grease compounded is in a range of 15 to 40 wt.%, an amount of the wax compounded is in a range of 15 to 30 wt.%, and a balance is the water.

In this grease composition, the thickener is constituted by at least one kind of component selected from the group consisting of a soap containing at least a calcium sulfonate complex or a lithium complex and a urea-based non-soap.

In this grease composition, it is preferable to use a carnauba wax as the wax. The water is contained in the form of an emulsion in the composition, and the emulsion is formed by agitation by using a mixer or a homogenizer when the water and other components are mixed.

The grease composition may further comprise at least one kind of component selected from the group consisting of a surfactant and a defoamer. In this case, the surfactant is compounded in a range of 0.01 to 10 wt.%, based on the weight of the composition. Further, the defoamer is compounded in a range of 0.01 to 5 wt.%, based on the weight of the composition. The grease composition may optionally further comprise at least one kind of additive selected from the group consisting of a solid lubricant, an extreme pressure additive, and an oiliness agent.

Further, this grease composition is used as a grease for lubrication. In this case, the grease for lubrication is produced by adjusting a compounding ratio between the wax and the grease to 2 : 1, for example. This grease composition is used as a grease for steel product surface treatment for mud prevention or for preventing the adhesion of marine organisms. In this case, the grease for steel product surface treatment for mud prevention or for preventing the adhesion of marine organisms is produced by adjusting a compounding ratio between the wax and the grease to 1 : 2, for example.

The grease composition in accordance with the invention is used as a welding spatter adhesion preventing grease for preventing the adhesion of a spatter to a periphery of a weld during welding. In this welding spatter adhesion preventing grease, preferably, based on the weight of the composition, the amount of the grease compounded is in a range of 15 to 20 wt.%, the amount of the wax compounded is in a range of 15 to 20 wt.%, and the balance is the water and an additive.

Meanwhile, a process for producing a grease composition in accordance with the invention comprises: a first step of agitating a grease produced by compounding at least one kind of base oil selected from a mineral oil-type lubricant base oil, a synthetic lubricant base oil, and a biodegradable lubricant base oil with a thickener while gradually adding part of water thereto, to thereby form an emulsion; a second step of gradually adding a wax to the emulsion while agitating an admixture thereof, to thereby form an entirety into a paste; a third step of adding remaining water to the paste to form a liquid in an emulsion state; and a fourth step of filtering the liquid to thereby produce the grease composition.

In this case, the thickener is constituted by at least one kind of component selected from the group consisting of a soap containing a calcium sulfonate complex or a lithium complex and a urea-based non-soap.

In the process for producing a grease composition, the formation of the emulsion may preferably be promoted by adding a surfactant together with the water in the first step.
Further, a defoamer is preferably added to the liquid formed in the third step.

### (EFFECTS OF THE INVENTION)

The grease composition and the process for production thereof according to the present invention, employ a thickener (for example, a calcium sulfonate complex) having an excellent rust preventing capability, as described above, and are therefore able to possess a high rust preventing capability due to its effect. Further, by virtue of the wax, adhesive power to a steel product becomes strong, and it is therefore possible to prevent the scattering of the grease composition.

Since water is used as a base in order to obtain a paste form, the grease composition can be made a non-solvent based grease composition. For this reason, the risk of catching fire is practically nil, and handling and applicability to a steel product are facilitated. Since the grease and the wax are principal components, by using a solvent such as methylene chloride, it is possible to provide a grease composition whose removal operation is extremely simple, and which is environmentally friendly as well.

The calcium sulfonate complex which is used as the thickener possesses extremely excellent surface pressure characteristics, and therefore the grease composition can be used for a gear and the like as a lubricant without the grease composition being removed.

On the other hand, in a case where the grease composition in accordance with the invention is used as a welding spatter adhesion preventing grease (namely, a welding spatter adhesion preventing agent), since it is a non-solvent based welding spatter adhesion preventing agent (liquid) using water as a base, as described above, there is no possibility of such as catching fire due to the effects of high temperature and high heat generated during welding. Hence, a coating operation or the like with respect to an object to be welded, for example, can be performed safely with ease. Since the grease composition is produced as a liquid having as its principal components a grease and a wax in addition to water, workability at the welding site and the environmental feature excel, and the effect of prevention of the adhesion of spatters can be enhanced sufficiently.

Further, the spatter adhesion preventing agent having the grease and the wax as its principal components can be easily removed by using a solvent such as methylene chloride or kerosene, light oil, or the like, making it possible to easily perform the operation of removing that spatter adhesion preventing agent after completion of the welding operation. The wax is necessary for suppressing the occurrence of stickiness and the like when the spatter adhesion preventing agent is applied to the surface of a base material (object to be welded) and is dried.

As for the spatter adhesion preventing agent, since the calcium sulfonate complex, for example, is used as a thickener of the grease, the spatter adhesion preventing agent is able to enhance the spatter adhesion prevention performance due to its effect. The adhesive power to a steel product (object to be welded) becomes strong by virtue of the wax, so that it is possible to obtain the scattering prevention effect in the state in which the spatter adhesion preventing agent consisting of a liquid is applied. Namely, it was confirmed that this spatter adhesion preventing agent allows a film of the calcium sulfonate complex to be formed on the applied surface during drying after application, and that this film exhibits high performance in preventing the adhesion of spatters. In terms of its hardness, this spatter adhesion preventing agent unlike a conventional one can be made soft and is easy to remove before its solidification, and it was possible to improve its removal performance.

This welding spatter adhesion preventing agent can be produced by compounding the grease in the range of 15 to 20 wt.%, compounding the wax in the range of 15 to 20 wt.%, based on the weight of the composition, and compounding the water as the balance. In this case, an additive may be compounded together with the water.

### BRIEF DESCRIPTION OF THE DRAWINGS

Fig. 1 is a characteristic diagram in which the number of spatters of test data in accordance with Experimental Example 1 of the invention is shown plotted in a graph;
Fig. 2 is a characteristic diagram in which the relationship between the spatter diameter and the number of spatters of test data in accordance with Experimental Example 1 is shown plotted in a graph;
Fig. 3 is a characteristic diagram in which the number of spatters of test data in accordance with Experimental Example 2 is shown plotted in a graph; and
Fig. 4 is a characteristic diagram in which the relationship between the spatter diameter and the number of spatters of test data in accordance with Experimental Example 2 is shown plotted in a graph.

### BEST MODE FOR CARRYING OUT THE INVENTION

Hereafter, a detailed description will be given of a grease composition and a process for production thereof in accordance with the embodiments of the invention.

First, a description will be given of a grease composition and a process for production thereof in accordance with a first embodiment of the invention.

The grease composition in accordance with the first embodiment is **characterized in that**, in particular, a grease produced by compounding at least one kind of base oil selected from a mineral oil-type lubricant base oil, a synthetic lubricant base oil, and a biodegradable lubricant base oil with a thickener is compounded with a wax and water.

In this case, as a mineral oil-type lubricant base oil, it is possible to cite, for example, "Diana Fresia"(tradename) made by Idemitsu Kosan Co., Ltd., as a lubricant base oil. As a synthetic lubricant base oil, it is possible to cite, for example, "MORESCO"(tradename) made by Matsumura Oil Co., Ltd., as a lubricant base oil. Further, as biodegradable lubricant base oils, it is possible to cite a general-purpose product base oil called "PAO"(polyalphaolein) or "XHVI" (tradename), which are made by SHOWA SHELL SEKIYU K. K., as a lubricant base oil.

As a grease in this grease composition, it is possible to use one disclosed in, for example, Japanese Patent Laid-Open No. 2002-265969 A. In this case, the aforementioned thickener is constituted by at least one kind of component selected from the group consisting of a soap containing a calcium sulfonate complex or a lithium complex and a urea-based non-soap.

Further, the calcium sulfonate complex is one to which a high total base number is imparted by processing calcium alkyl sulfonate or calcium alkyl benzene sulfonate which is neutral, and this calcium sulfonate complex is also called highly basic calcium sulfonate. As a calcium sulfonate complex, it is possible to cite, for example, "Calforex" (tradename) made by Nippon Koyu Ltd. As a lithium complex, it is possible to cite, for example, "Daphney Eponex SR" (tradename) made by Idemitsu Kosan Co., Ltd. Further, as a urea-based non-soap, it is possible to cite, for example, "COSMO UREA GREASE" (tradename) made by Cosmo Oil Co., Ltd.

In addition, as a wax, a plant-derived carnauba wax produced by being extracted from the leaves of the carnauba palm is most preferable among waxes. Meanwhile, in a case where a paraffin-based wax is used as the wax, although it is allowed to dry after its application, there occurs a phenomenon in which it re-emulsifies even after drying, making it impossible to maintain the film on the applied surface . Hence, there is a need to take into consideration the portions to which it is applied.

As for the grease composition in accordance with the first embodiment, a grease in which a calcium sulfonate serving as a base is used as a thickener is first produced. The main functions of this grease are the anti-corrosion effect and extreme-pressure properties. Subsequently, a lubricant serving as a base is prepared by adding a wax having a plant-derived wax as a principal component, sodium alkyl sulfonate which is one of surfactants, a silicone oil which is a defoamer, or an organic defoamer. The wax is necessary for suppressing the stickiness after drying. It has been found that, without the wax, the grease composition is extremely sticky and induces the adhesion of dust thereon, possibly causing damage to the surface of a member to be protected, and that, without the defoamer and the surfactant, the quality of the film during drying is unstable, causing the rust prevention performance to decline.

The water and the grease are formed into an emulsion at a ratio of 1 : 1 by using a homogenizer. In this form, since the water and the grease exist in the emulsion state, only the lubricant remains when the emulsion dries after its application, allowing a film exhibiting the anti-corrosion performance to be formed. At this time, since control of the film thickness is effected by the proportion of the water, it is possible to change the required anti-corrosion performance by the proportion of the water, depending on the intended use.

In this case, if the ratio of the water to the grease is 1 : 1, for example, anti-corrosion performance similar to that of an anti-corrosion oil can be demonstrated. If the ratio of the water to the grease becomes 2 : 1, the rust preventing capability declines. However, as the proportion of the water increases, the grease composition excels in workability at the time of its application.

Next, a description will be given of the process for producing a grease composition in accordance with the first embodiment.

In this process for producing a grease composition, water and a surfactant are gradually added to a grease obtained by compounding at least one kind of base oil selected from a mineral oil-type lubricant base oil, a synthetic lubricant base oil, and a biodegradable lubricant base oil with a calcium sulfonate complex, which is a thickener, thereby forming a satisfactory emulsion while promoting the formation of the emulsion (first step). Next, a wax is gradually added to that emulsion while being stirred to thereby form the entirety into a paste (second step).

Furthermore, the remaining water is added to the aforementioned paste to form a liquid in the emulsion state (third step). In this case, a defoamer may be added to that liquid. Finally, the liquid is filtered by using a filter with 60 to 100 mesh, for example, thereby producing a grease composition (fourth step). Subsequently, this grease composition is transferred to a container, and the container is hermetically sealed, thereby completing the product.

In this state, the worked penetration (consistency) of the grease composition used here is No. 2 (265 to 295). However, as the range of the working consistency of the grease composition, a grease composition with No. 0 to No. 3 (385 to 220) or thereabouts can be used, and it is presumed that this consistency range is an appropriate range of grease hardness.

In this process for producing a grease composition, in a case where the water is gradually added to the grease, it is preferable to obtain an emulsion state by adding a surfactant. As the surfactant, one containing at least one kind among such as anionic, non-ionic, zwitterionic, and cationic surfactants is used.

As the anionic surfactant, it is possible to cite sodium alkyl sulfonate, for example.
Further, as the non-ionic surfactant, it is possible to cite polyoxyethylene alkyl ether, for example. Further, as the zwitterionic surfactant, it is possible to cite such as alkyldimethylamine oxide. Furthermore, as the cationic surfactant, it is possible to cite such as alkyl trimethyl ammonium salt.

Although this surfactant is necessary for facilitating the mixing of the grease and the water, in a case where a calcium sulfonate complex grease is used as a thickener, mixing is possible without a surfactant. In addition, as for the wax, in a case where the water and the grease are mixed into the emulsion state, the water and the grease can be easily mixed into a paste by causing the wax to melt by heating or the like.

Further, the agitation for mixing the grease and the water (optionally, the water and a surfactant) is initially effected at 500 to 800 rpm by using a high-speed mixer or an ultrasonic mixer, the rotational speed is then gradually increased, and the agitation is finally effected at a high speed of 2000 to 3000 rpm or thereabouts until the entirety becomes a uniform emulsion. Alternatively, the grease and the water (or the grease, the water, and the surfactant) may be mixed by using a homogenizer so that the entirety assumes a uniform emulsion state.

In particular, in a case where a wax emulsion is formed by mixing a wax with an emulsion of the water and the grease, the mixing is effected such that the agitation is initially effected at low speed, and the agitation is gradually effected at high speed, whereby it is possible to avoid the wax emulsion from scattering during the agitation and from adhering to an agitation container and solidifying. This grease composition is made as a non-solvent diluted type product by satisfactorily mixing the easy-to-solidify wax emulsion with the emulsion of the water and the grease and by further adding the water to the admixture, thereby making its coating property of the surface of a steel member satisfying.

### (Examples 1 to 8)

In Examples 1 to 8 shown in Table 1 below, a grease obtained by compounding a base oil with a calcium sulfonate complex which is a thickener (namely, a calcium sulfonate complex grease) was mixed with a wax component (e.g., carnauba wax) and the water, and various additives were compounded therewith in some cases. On the other hand, Table 2 shows Comparative Examples 1 to 4 with respect to Examples 1 to 8.

In this case, in Examples 2 to 8 and Comparative Examples 2 to 4, sodium alkyl sulfonate was added as a surfactant. In Examples 5 to 8, a silicone oil was added as a defoamer. Further, in Tables 1 and 2 below, results are shown in which a salt spray test was conducted on Examples 1 to 8 and Comparative Examples 1 to 4.

In Tables 1 and 2, concerning the results in which the grease compositions of the respective specimens (Examples 1 to 8 and Comparative Examples 1 to 4) were applied to steel plates by brush coating, those in which coating could be effected very easily are represented by a double circle "⊚", those in which coating was satisfactory by a circle "○", and those in which the coating work was difficult by a cross "×".

After each specimen was applied to a steel plate, the steel plate was set in a salt spray test tank, and the spraying of 5% salt water onto this steel plate was continued at a rate of 1 to 3 ml/hr. Then, after the lapse of 72 hours, 144 hours, and 500 hours, the degree of rust development on the steel plate was compared. As for the degree of rust development on the steel plate, Class A shows that there was no rust, while Class B, Class C, and Class D show that there was rust development, the area of rust development increasing from Class B toward Class D.

**[Table 1]**

| Specimen | Examples | | | | | | | |
|---|---|---|---|---|---|---|---|---|
| | 1 | 2 | 3 | 4 | 5 | 6 | 7 | 8 |
| Wax Component | 15 | 15 | 15 | 20 | 20 | 15 | 30 | 20 |
| Calcium sulfonate complex grease | 15 | 15 | 20 | 20 | 20 | 30 | 15 | 40 |
| Surfactant | 0 | 5 | 5 | 5 | 7 | 10 | 7 | 7 |
| Defoamer | 0 | 0 | 0 | 0 | 3 | 5 | 3 | 3 |
| Water | 70 | 65 | 60 | 55 | 50 | 40 | 45 | 30 |
| Coating properties | ⊚ | ⊚ | ○ | ○ | ○ | ○ | ○ | × |
| Salt spray test result, 72 hrs. | B | A | A | A | A | A | A | A |
| lt spray test result, 144 hrs. | D | C | B | B | A | A | A | A |
| Salt spray test result, 500 hrs. | - | - | - | - | A | A | B | A |

**[Table 2]**

| Specimen | Comparative Examples | | | |
|---|---|---|---|---|
| | 1 | 2 | 3 | 4 |
| Wax Component | 0 | 10 | 30 | 50 |
| Calcium sulfonate complex grease | 80 | 60 | 40 | 10 |
| Surfactant | 0 | 1 | 3 | 5 |
| Defoamer | 0 | 0 | 0 | 0 |
| Water | 20 | 29 | 27 | 35 |
| Coating properties | × | × | × | × |
| Salt spray test result, 72 hrs. | A | A | B | C |
| Salt spray test result, 144 hrs. | B | B | - | - |
| Salt spray test result, 500 hrs. | - | - | - | - |

As can be seen from Table 1, in Example 1, it can be understood that although the proportion of the water was large, and the surfactant and the defoamer were not contained, the coating properties are satisfying, and that the anti-corrosion properties slightly deteriorate. Accordingly, it can be appreciated that, depending on an object for which it is used, the grease composition of Example 1 is able to sufficiently exhibit the anti-corrosion properties and is usable. In Examples 2 to 4, the proportion of the water was made gradually smaller, and although a surfactant was added, a defoamer was not added. As for the grease compositions of Examples 2 to 4, it can be appreciated that the coating properties are satisfying, and that although the anti-corrosion properties in the salt spray test slightly decline in Example 2 due to a large amount of water, as for Examples 3 and 4, the anti-corrosion properties in the salt spray test are acceptable. In Examples 5 to 8, the water was 50 to 30 wt.%, and a surfactant and a defoamer were added. As for Examples 5 to 8, it can be appreciated that the salt spray test is satisfying, and that the anti-corrosion properties are excellent. As for Example 8, it can be appreciated that although the workability during its application decline due to a small proportion of the water, the grease composition of Example 8 excels in the anti-corrosion properties and is of sufficient practical value even after a salt spray test was conducted for a prolonged time.

Meanwhile, as can be seen from Table 2, the grease compositions of Comparative Examples 1 to 4 had small proportions of the water (20 to 35 wt.%) and therefore displayed difficulty in the coating properties. In Comparative Example 1, a wax, a surfactant, and a defoamer were not added, and the results of the coating properties and the salt spray test in the case where the grease alone was used are shown. In Comparative Example 2, although a wax and a surfactant were added slightly, the properties of practically a grease alone are shown. In Comparative Example 3, although the proportion of the wax added was 30 wt.%, the proportion of the water was small at 27 wt.%, so that the coating properties were poor, and the result of the salt spray test was not sufficient. Moreover, as for Comparative Example 4, the proportion of the wax was large, and the proportion of the water was small as compared with the proportion of the wax, so that good results were not obtained in the coating properties and the anti-corrosion properties.

From the above, it can be understood that this grease composition suffices if the proportion of the water is 30 to 70 wt.%, preferably 50 to 45 wt.% or thereabouts. It can be understood that the surfactant should preferably be added to obtain an emulsion state, and that the defoamer should preferably be added since the defoamer is capable of suppressing the generation of foam at the time of application of the grease composition.

Namely, the aforementioned surfactant is compounded in the range of 0.01 to 10 wt.%, based on the weight of the composition. Also, the aforementioned defoamer is compounded in the range of 0.01 to 5 wt.%, based on the weight of the composition.

Concerning the grease composition in accordance with this invention, conceivably, the fact that the defoamer was mixed in was also largely accountable for the reason that the results of the salt spray test were satisfying. This was because it was found from the results of the heretofore-conducted tests that the generation pattern of rust is similar to that of foam generated during the application. Accordingly, when the defoamer, which is frequently adopted in oil-based lubricants but not adopted in grease compositions, was mixed in, the generation of foam at the time of the application was nil, and a uniform film was obtained. Thus, it was possible to obtain extremely sufficient results in enhancing the anti-corrosion performance, as described above.

Although grease compositions having anti-corrosion properties have been described in the foregoing Examples, it is possible to produce grease compositions of forms having utterly different performances by merely changing the compounding ratio between the wax and the calcium sulfonate complex grease.

For example, if the compounding ratio between the wax and the calcium sulfonate complex grease is adjusted to 2 : 1 or thereabouts, the grease composition can be used as a grease composition for a thrust bearing, such as for lubrication, which exhibits very little stickiness.

If the compounding ratio between the wax and the calcium sulfonate complex grease is adjusted to 1 : 2 or thereabouts, since an oil film is formed on the surface of a steel product, the grease composition can be applied as a product for the surface treatment of a steel product by a mud preventing grease, and is also applicable as a product for the surface treatment of a steel product for the prevention of adhesion of marine organisms.

The grease composition in accordance with the first embodiment may be applied by coating, spraying, or the like to sliding portions between members, bearings, and steel product surfaces in various machine equipment including construction machines, civil engineering machines, vehicles, automobiles, marine vessels, and the like, and is suitably used for the sliding portions in particular.

Next, a detailed description will be given of a welding spatter adhesion preventing grease (hereafter referred to as the welding spatter adhesion preventing agent) which is adopted in a second embodiment of the invention.

The welding spatter adhesion preventing agent in accordance with the second embodiment has a substantially similar constitution to that of the grease composition in accordance with the above-described first embodiment, and is **characterized in that** a grease produced by compounding at least one kind of base oil selected from a mineral oil-type lubricant base oil, a synthetic lubricant base oil, and a biodegradable lubricant base oil with a thickener is compounded with a wax and water by being mixed and stirred.

As for the welding spatter adhesion preventing agent in accordance with the second embodiment, a grease in which a calcium sulfonate serving as a base is used as a thickener is first produced. The main function of this grease is the performance of prevention of adhesion of welding spatters. Subsequently, a lubricant serving as a base is prepared by adding, as required, a wax having a plant-derived wax as a principal component, sodium alkyl sulfonate which is one of surfactants, and a silicone oil which is a defoamer.

In this case, the wax is necessary for suppressing the stickiness after drying. Without the wax, stickiness occurs, and the adhesion of dust is likely induced, possibly causing damage to the surface of a base material (object to be welded). Namely, in a case where the wax is not used, stickiness undesirably remains on the coated surface and constitutes a cause of inducing the adhesion of dust, sand grains, and the like on the base material surface, so that the possibility of damaging the surface of the base material during a welding operation becomes high condition. However, the addition of the wax makes it possible to suppress the generation of the stickiness, allowing the surface with the spatter adhesion preventing agent applied thereto to be kept in a clean state. On the other hand, the case where the defoamer or the surfactant is not used, the quality of the film during drying is not stable, and the performance as the spatter adhesion preventing agent tends to decline.

The water contained in the welding spatter adhesion preventing agent is present in the form of an emulsion within the composition by high-speed agitation. In this case, the water and the grease are formed into an emulsion at a compounding ratio of, for example, 1 : 1 by using a homogenizer. In this form, since the water and the lubricant (namely, a lubricant in which sodium alkyl sulfonate and a silicone oil are added to the grease and the wax) exist in an emulsified state, only the lubricant remains when the emulsion dries after its application, allowing a film exhibiting the welding spatter adhesion prevention performance to be formed.

Further, control of the film thickness is effected by the compounding proportion of the water. For this reason, it is possible to change the performance and intended usage required for the prevention of adhesion of spatters in correspondence with the proportion of the water. Namely, if the compounding ratio between the water and the lubricant is 1 : 1, the spatter adhesion preventing agent exhibits the rust preventing capability similar to those of anti-corrosion oil and spatter adhesion prevention performance, but if the compounding ratio becomes 2 : 1, the rust preventing capability and the spatter adhesion prevention performance relatively decline. In this case, however, it is possible to improve the workability at the time of coating as the spatter adhesion preventing agent.

Next, a description will be given of the process for producing a welding spatter adhesion preventing agent in accordance with the second embodiment.

This process for producing a welding spatter adhesion preventing agent in the same way as the first embodiment prepares a grease (for example, a calcium sulfonate complex grease) by compounding at least one kind of base oil selected from a mineral oil-type lubricant base oil, a synthetic lubricant base oil, and a biodegradable lubricant base oil with a calcium sulfonate complex which is a thickener. The water (optionally, the water and a surfactant) is gradually added to the thus-obtained grease to form a satisfactory emulsion while promoting the formation of the emulsion.

Then, a wax is gradually added to the thus-formed emulsion while being stirred to thereby form the entirety into a paste. Furthermore, the remaining water is added to this paste to form a liquid in the emulsion state. In this case, a defoamer may be added together with the water to form the liquid.

Finally, the aforementioned liquid is filtered by using a filter with 60 to 100 mesh, for example, and a welding spatter adhesion preventing agent consisting of a liquid is thereby produced. After this welding spatter adhesion preventing agent is transferred to a container, this container is hermetically sealed, thereby completing a liquid product (welding spatter adhesion preventing agent).

The welding spatter adhesion preventing agent in accordance with the second embodiment is made as an aqueous type (non-solvent type) product by satisfactorily mixing the easy-to-solidify wax emulsion with the emulsion of the water and the grease and by further adding the water to the admixture, thereby rendering satisfying its applicability to the surface of a base material to be welded.

### (Examples 11 to 15)

Table 3 below shows the results of a performance test as to whether or not welding spatters were adhered, which performance test was conducted on Examples 11 to 15 in which a grease (a calcium sulfonate complex grease) obtained by compounding a base oil with a thickener was mixed with a wax component (for example, carnauba wax) and the water, and various additives were compounded therewith in some cases.

In this case, in Examples 12 to 15, sodium alkyl sulfonate was added as a surfactant. In addition, in Example 5, a silicone oil was added as a defoamer.

In Table 3, concerning the results in which the welding spatter adhesion preventing agents of the respective specimens (Examples 11 to 15) were applied to the base material to be welded (steel plates) by brush coating, those in which coating could be effected very easily are represented by a double circle "⊚", and those in which coating was satisfactory by a circle "○". Then, after the application of the respective specimens onto the steel plates, welding operation was performed, and whether or not the adhesion of spatters was present was visually confirmed.

As can be seen from Table 3, in Example 11, the compounding proportion of the water was large at 70 wt.%, based on the weight of the composition, and the surfactant and the defoamer were not contained. However, the specimen of Example 11 was extremely satisfying in the coating properties, and it can be appreciated that it is capable of preventing the adhesion of welding spatters. Accordingly, it can be appreciated that the welding spatter adhesion preventing agent of Example 11 is suitable in use when applied to the base material to be welded, and also excels in its performance in preventing the adhesion of welding spatters.

Meanwhile, in Examples 12 to 14, the compounding proportion of the water was made gradually smaller from 65 to 55 wt.%. In this case, a surfactant was added, but a defoamer was not added. It can be appreciated that the welding spatter adhesion preventing agents in Examples 12 to 14 display satisfying coating properties and are capable of sufficiently preventing the adhesion of welding spatters.

Further, in Example 15, the compounding proportion of the water was set to 50 wt.%, and the surfactant and the defoamer were added as additives. It can be appreciated that the specimen in accordance with this Example E also displays satisfying coating properties and is capable of preventing the adhesion of welding spatters.

**[Table 3]**

| Specimen | Examples | | | | |
|---|---|---|---|---|---|
| | 11 | 12 | 13 | 14 | 15 |
| Wax Component | 15 | 15 | 15 | 20 | 20 |
| Calcium sulfonate complex grease | 15 | 15 | 20 | 20 | 20 |
| Surfactant | 0 | 5 | 5 | 5 | 7 |
| Defoamer | 0 | 0 | 0 | 0 | 3 |
| Water | 70 | 65 | 60 | 55 | 50 |
| Coating properties | ⊚ | ⊚ | ○ | ○ | ○ |
| Test result | No spatter adhesion | No spatter adhesion | No spatter adhesion | No spatter adhesion | No spatter adhesion |

As described above, the welding spatter adhesion preventing agent in accordance with the second embodiment can be produced by compounding 15 to 20 wt.% of a grease (calcium sulfonate complex grease), 15 to 20 wt.% of a wax, and a balance of at least water. In this case, as the balance, water and additives (surfactant and defoamer) can be compounded as in Examples 12 to 15.

In addition, it can be understood that the proportion of the water to be compounded with the welding spatter adhesion preventing agent suffices if it is, for example, 50 to 70 wt.%, preferably 65 to 70 wt.% if particularly the coating properties are taken into consideration. It is preferable to add the surfactant in order to set the spatter adhesion preventing agent into the emulsion state.

Meanwhile, it can he understood that the defoamer is preferable in suppressing the generation of foam at the time of application of the spatter adhesion preventing agent. When the defoamer, which is generally not adopted in the spatter adhesion preventing agent, was mixed in, the generation of foam at the time of application was nil, and a uniform film was obtained, so that it was possible to obtain an extremely satisfying result also in the prevention of adhesion of welding spatters, as described above.

### (Experimental Example 1)

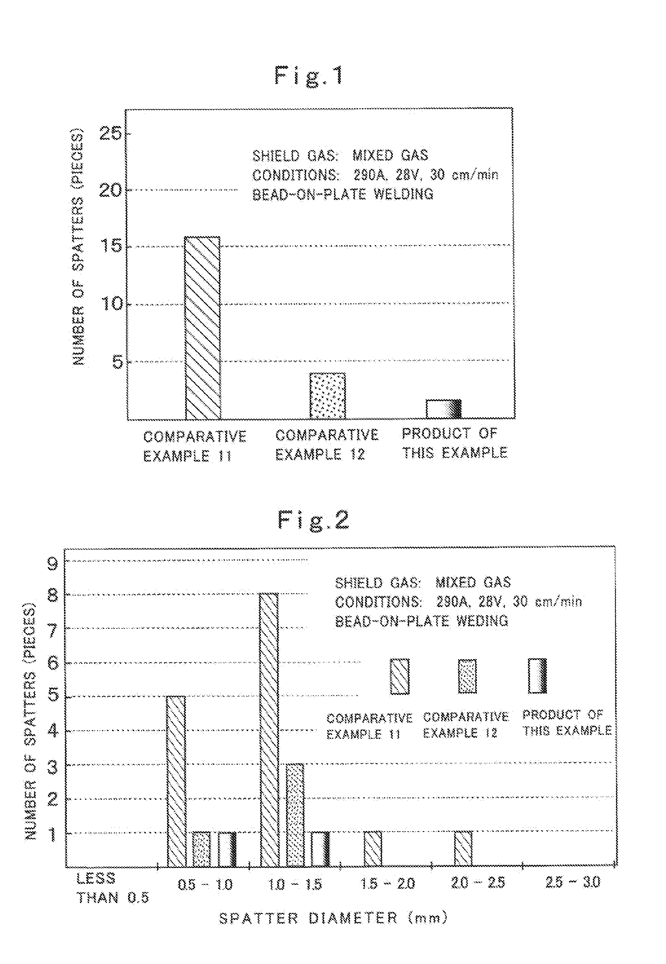

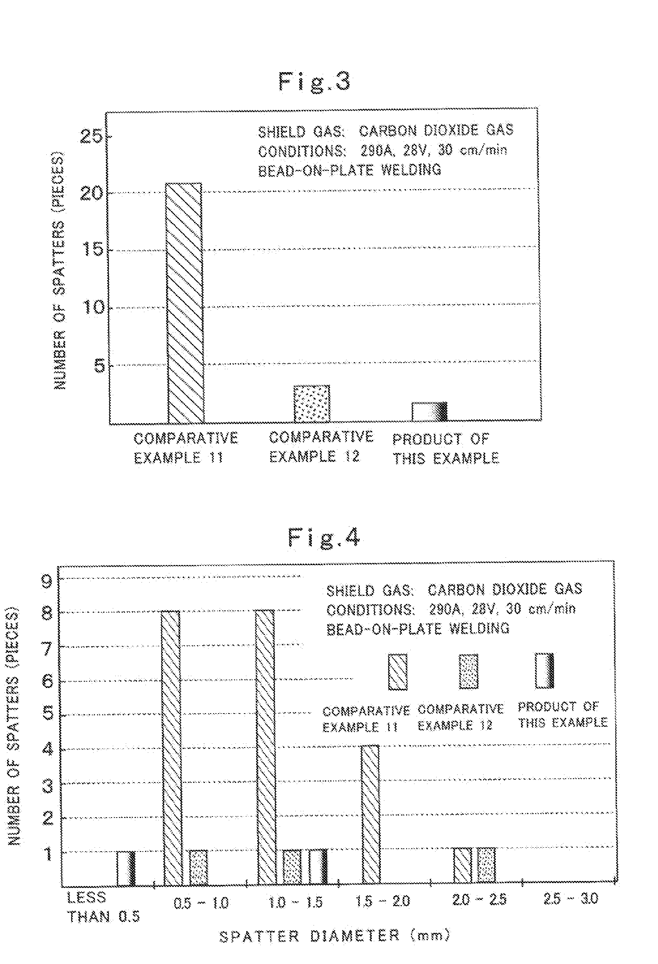

Next, test data in cases where the welding spatter adhesion preventing agent in accordance with the above-described Example 15 (see Fig. 3) (hereafter referred to as the product of this Example) was applied to the peripheries of welding portion are shown in Figs. 1 and 2 as Experimental Example 1. These Figs. 1 and 2 are property diagrams in which the results of comparison between the welding spatter adhesion preventing agent of the product of this Example and conventional products (Comparative Examples 11 and 12 described below) are shown plotted in graphs.

In this case, an iron plate (SS400) with a length of 200 mm, a width of 250 mm, and a thickness of 10 mm was used as the base material to be welded, and the welding spatter adhesion preventing agent in accordance with the above-described Example E was applied to its black scale by brush coating. Then, in a state in which the spatter adhesion preventing agent sufficiently dried, bead-on-plate welding was performed on a central portion of the aforementioned iron plate.

Next, after completion of the welding operation, the fume on the surface was wiped off with waste cloth, and in this state the number of welding spatters adhered on the coated portion and their outside diameters (spatter diameters) were consecutively measured, thereby preparing the test data shown in Figs. 1 and 2 as the results of comparison between the product of this Example and Comparative Examples 11 and 12.

Here, as for the test data shown in Figs. 1 and 2, a commonly-used mixed gas (80% Ar - 20% CO₂) was used as a shield gas for welding, and YM-28S (commodity classification name) made by Nippon Steel & Sumikin Welding Co., Ltd., and having an outside diameter of 1.2 mm, for example, was used as a welding wire. Further, the welding current was 290A, the voltage was 28V, its welding speed was set to 30 cm/min, and the projection length of the wire was set to, for example, 22 mm, under which conditions a welding operation was performed.

On the other hand, in Comparative Example 11, a conventionally commercially available spatter adhesion preventing agent (tradename : KLIN SPATTER 300" made by Taihokohzai Co., Ltd., containing 4.0% polyethylene nonylphenyl ether as a component) constituted by a non-ionic surfactant was used. Further, the spatter adhesion preventing agent of Comparative Example 11 (aqueous type) was set under identical conditions to those of the spatter adhesion preventing agent of the product of this Example except that its undiluted solution was sprayed to the black scale on the iron plate by a sprayer.

In Comparative Example 12, a commercially available spatter adhesion preventing agent (tradename: "KLIN SPATTER GW-2" made by Taihokohzai Co., Ltd., containing isopropyl alcohol as a component) containing an organic solvent was used. The spatter adhesion preventing agent of Comparative Example 12 (non-aqueous type) was applied to the black scale on the iron plate by brush coating in the same way as the spatter adhesion preventing agent of the product of this Example, and its conditions were set identical to those of the product of this Example.

Then, in the case of these Comparative Examples 11 and 12 as well, after completion of the welding operation, the fume on the surface was wiped off with waste cloth, and in this state the number of welding spatters adhered on the coated portion and their outside diameters (spatter diameters) were measured. As a result, as shown in Fig. 1, with the spatter adhesion preventing agent of Comparative Example 11, it was confirmed that a total of 16 welding spatters were adhered. Meanwhile, with the spatter adhesion preventing agent of Comparative Example 12, it was confirmed that a total of 4 welding spatters were adhered.

In contrast, with the welding spatter adhesion preventing agent of the product of this
Example produced as described above, it was confirmed that a total of 2 welding spatters were adhered. Looking at its breakdown, as shown in Fig. 2, the adhesion of one spatter was noted in the range in which the outside diameter (spatter diameter) of the adhered spatter was of the size of 0.5 to 1.0 mm, while only one spatter was found in the size of 1.0 to 1.5 mm. Overall, the adhesion of welding spatters was at such a level as to be practically negligible.

Meanwhile, looking at Comparative Example 11 (aqueous type spatter adhesion preventing agent), 5 spatters were found in the size of 0.5 to 1.0 mm in terms of the spatter diameter, and the number increased to 8 spatters in the size of 1.0 to 1.5 mm, as shown in Fig. 2. In addition, 1 spatter was noted in the size of 1.5 to 2.0 mm in terms of the spatter diameter, and the adhesion of one spatter was noted in the size of 2.0 to 2.5 mm. Overall, it was confirmed that the adhesion of welding spatters was very noticeable.

Further, looking at Comparative Example 12 (non-aqueous type spatter adhesion preventing agent), the adhesion of one spatter in the size of 0.5 to 1.0 mm in terms of the spatter diameter and the adhesion of up to 3 spatters in the size of 1.0 to 1.5 mm were confirmed. Therefore, as for the spatter adhesion preventing agent of Comparative Example 2 as well, the adhesion of welding spatters was noticeable as compared with the product of this Example, and it was confirmed that the product of this Example is most notable in the effect of preventing the adhesion of welding spatters.

### (Experimental Example 2)

Next, Figs. 3 and 4 show Experimental Example 2 in a case where carbon dioxide gas arc welding was used. In this case as well, the results of comparison between the welding spatter adhesion preventing agent in accordance with Example 15 (see Fig. 3) and conventional products (Comparative Examples 11 and 12 substantially similar to Experimental Example 1) are shown plotted in graphs.

In this case, a test data was prepared by using carbon dioxide gas (100% CO₂) as a shield gas for welding, and the conditions were set identical to those of the above-described Experimental Example 1 except that YM-26 (commodity classification name) made by Nippon Steel & Sumikin Welding Co., Ltd., and having an outside diameter of 1.2 mm, for example, was used as a welding wire.

Namely, the welding spatter adhesion preventing agent in accordance with Example 15 in the above-described Table 3 was applied by brush coating to the black scale on the iron plate (SS400) to be welded. In a state in which this spatter adhesion preventing agent sufficiently dried, bead-on-plate welding was performed on a central portion of the aforementioned iron plate, as described in Experimental Example 1.

Then, after completion of the carbon dioxide gas arc welding, the fume on the surface was wiped off with waste cloth, and in this state the number of welding spatters adhered on the coated portion and their outside diameters (spatter diameters) were consecutively measured, thereby preparing the test data shown in Figs. 3 and 4 as the results of comparison between the product of this Example and Comparative Examples 11 and 12.

As a result, as shown in Fig. 3, with the spatter adhesion preventing agent of Comparative Example 11 (aqueous type), it was confirmed that a total of 21 welding spatters were adhered. Meanwhile, with the spatter adhesion preventing agent of Comparative Example 12 (non-aqueous type), it was confirmed that a total of 3 welding spatters were adhered.

In contrast, with the welding spatter adhesion preventing agent of the product of this Example, it was confirmed that a total of 2 welding spatters were adhered. Looking at its breakdown, as shown in Fig. 4, the adhesion of one spatter was noted in the range in which the outside diameter (spatter diameter) of the adhered spatter was of the size of less than 0.5, while only one spatter was found in the size of 1.0 to 1.5 mm. Overall, the adhesion of welding spatters was at such a level as to be practically negligible.

Meanwhile, looking at Comparative Example 11 (aqueous type welding spatter adhesion preventing agent), 8 spatters were found in the size of 0.5 to 1.0 mm in terms of the spatter diameter, and 8 spatters were also found in the size of 1.0 to 1.5 mm, as shown in Fig. 4. Moreover, 4 spatters were noted in the size of 1.5 to 2.0 mm in terms of the spatter diameter, and the adhesion of one spatter was noted in the size of 2.0 to 2.5 mm. Overall, it was confirmed that the adhesion of welding spatters was very noticeable.

Furthermore, looking at Comparative Example 12 (non-aqueous type spatter adhesion preventing agent), the adhesion of one spatter in the size of 0.5 to 1.0 mm in terms of the spatter diameter, the adhesion of one spatter in the size of 1.0 to 1.5 mm, and the adhesion of one spatter in the size of 2.0 to 2.5 mm were confirmed. Therefore, as for the spatter adhesion preventing agent of Comparative Example 12 as well, the adhesion of welding spatters was noticeable as compared with the product of this Example, and it was confirmed that the product of this Example is most notable in the effect of preventing the adhesion of welding spatters.

It should be noted that, in the above-described first and second embodiments, a description has been given by citing as an example the case in which a soap containing, for example, a calcium sulfonate complex is used as a thickener of the grease. However, the invention is not limited to this particular example. For instance, a soap containing a lithium complex in substitution of the calcium sulfonate complex may be used. Further, the thickener of the grease may be constituted by, for example, a urea-based non-soap. Also, both a soap containing a calcium sulfonate complex and a urea-based non-soap grease, for example, may be adopted as thickeners.

In the invention, by merely changing the compounding ratio between the wax and the calcium sulfonate complex grease, it is possible to produce spatter adhesion preventing agents (products) of forms having utterly different performances. For example, if the compounding ratio between the wax and the calcium sulfonate complex grease is adjusted to 2 : 1 or thereabouts, the spatter adhesion preventing agent can be used as one which exhibits very little stickiness. Meanwhile, if the compounding ratio between the wax and the calcium sulfonate complex grease is adjusted to 1 : 2 or thereabouts, it is possible to allow an oil film to be formed on such as the surface of a steel product.

## Claims

1. A grease composition comprising: a grease produced by compounding at least one kind of base oil selected from the group consisting of a mineral oil-type lubricant base oil, a synthetic lubricant base oil, and a biodegradable lubricant base oil with a thickener; a wax; and water,
wherein, based on the weight of the composition, an amount of said grease compounded is in a range of 15 to 40 wt.%, an amount of said wax compounded is in a range of 15 to 30 wt.%, and a balance is the water.

2. The grease composition according to claim 1, wherein said thickener is constituted by at least one kind of component selected from the group consisting of a soap containing a calcium sulfonate complex or a lithium complex and a urea-based non-soap.

3. The grease composition according to claim 1, wherein said wax is a carnauba wax.

4. The grease composition according to claim 1, wherein said water is contained in the form of an emulsion.

5. The grease composition according to claim 4, wherein said emulsion is formed by agitation by using a mixer or a homogenizer when said water and other components are mixed.

6. The grease composition according to claim 1, further comprising: at least one kind of component selected from the group consisting of a surfactant and a defoamer.

7. The grease composition according to claim 6, wherein said surfactant is compounded in a range of 0.01 to 10 wt.%, based on the weight of the composition.

8. The grease composition according to claim 6, wherein said defoamer is compounded in a range of 0.01 to 5 wt.%, based on the weight of the composition.

9. The grease composition according to claim 1, further comprising: at least one kind of additive selected from the group consisting of a solid lubricant, an extreme pressure additive, and an oiliness agent.

10. The grease composition according to claim 1, wherein said grease composition is used as a grease for lubrication.

11. The grease composition according to claim 10, wherein a compounding ratio between said wax and said grease is 2 : 1, and said grease composition is used as said grease for lubrication.

12. The grease composition according to claim 1, wherein said grease composition is used as a grease for steel product surface treatment for mud prevention or for preventing the adhesion of marine organisms.

13. The grease composition according to claim 12, wherein a compounding ratio between said wax and said grease is 1 : 2, and said grease composition is used as said grease for steel product surface treatment for mud prevention or for preventing the adhesion of marine organisms.

14. The grease composition according to claim 1, wherein said grease composition is used as a welding spatter adhesion preventing grease for preventing the adhesion of a spatter to a periphery of a welding portion during welding.

15. The grease composition according to claim 14, wherein, based on the weight of the composition, the amount of said grease compounded is in a range of 15 to 20 wt.%, the amount of said wax compounded is in a range of 15 to 20 wt.%, and the balance is the water and an additive.

16. A process for producing a grease composition, comprising:
a first step of agitating a grease produced by compounding at least one kind of base oil selected from a mineral oil-type lubricant base oil, a synthetic lubricant base oil, and a biodegradable lubricant base oil with a thickener while gradually adding part of water thereto, to thereby form an emulsion;
a second step of gradually adding a wax to said emulsion while agitating an admixture thereof, to thereby form an entirety into a paste;
a third step of adding remaining water to said paste to form a liquid in an emulsion state; and
a fourth step of filtering said liquid to thereby produce the grease composition.

17. The process for producing a grease composition according to claim 16, wherein said thickener is constituted by at least one kind of component selected from the group consisting of a soap containing a calcium sulfonate complex or a lithium complex and a urea-based non-soap.

18. The process for producing a grease composition according to claim 16, wherein, in said first step, the formation of said emulsion is promoted by adding a surfactant.

19. The process for producing a grease composition according to claim 16, wherein a defoamer is added to said liquid formed in said third step.
